# EUROPEAN PATENT APPLICATION

(11) **EP 1 001 592 A1**
(43) Date of publication of application: **17.05.2000**
(21) Application number: 98309214.9
(22) Date of filing: 11.11.1998
(51) Int. Cl.: H04M 3/50

(54) **Extending internet calls to a telephone call center**

(71) Applicant: BRITISH TELECOMMUNICATIONS public limited company, London EC1A 7AJ (GB)
(72) Inventor: Shepherd, John William, Heathfiled, East Sussex, TN21 8XE (GB)

(57) **Abstract**

In a telecommunications network which includes access servers having a point of presence on the PSTN and a point of presence on a connectionless network whereby a customer of the PSTN may effect communication with pages of information held on servers having an address on the connectionless network, some pages include a "call me" icon. If a browser selects the call me icon a telephone number associated with the customer's terminal is captured together with the URL of the page from which the request originated. The captured data is then used to establish a call between the requesting customer and the page provider.

## Description

The present invention relates to telecommunications networks and more particularly to services provided thereon.

The expansion and development of the so-called internet or world-wide web has provided the general public with access to vast quantities of information. The internet has also allowed businesses to advertise their wares in a relatively inexpensive manner.

For access to the internet customers usually sign up with an "Internet service provider" (ISP), the service provider having a point of presence (POP) on the public switched telephone network (PSTN). The POP will be represented by a simple telephone number which will allow connection through the PSTN to a so-called access server being the data link address point on the internet. The access server obtains from the customer a user name and an associated password which reflects the user's authorisation to access the internet by way of the server and allows the ISP to raise billing. As an alternative to requiring the user to enter both a name and a password the ISP's access server may be responsive to calling line identity information from the customer and require only entry of a password. A further method may use a so-called user "cookie" which identifies the source of the incoming call.

The service provider's system now receives data from the customer, the data identifying servers world-wide and information stored thereon which the customer may wish to access. By this means pages of information stored on any publicly accessible server may be downloaded to the customer's own computer terminal.

Most service providers will also allow their customers to store pages of information for access by other members of the public or for access by a secured group. An advertiser may sign up with a service provider or may indeed have an internet server of its own on which pages of information are stored. One feature of such pages and of so-called network browser software is the ability to provide links or hyperlinks to other pages on the server or to any other address on the internet. Such links allow click and jump access to other pages with a minimum of effort on the part of a computer terminal user.

Other features provided by either browser software or by service providers include search engines which on the basis of key words entered by the terminal users will locate information related to a particular subject of interest.

Thus a customer browsing a particular subject may come across an advertiser's page which is of interest. This may prompt the customer to wish to communicate with the advertiser to verify details or to arrange purchase of an advertised item.

According to the present invention there is provided a telecommunications network including an access server having a POP on the telecommunications network, the access server further having an address on a data interchange network, said data interchange network having a plurality of servers addressable by way of the data network and including pages of information accessible by users of terminal equipment, at least some of said pages when displayed including a service link defining a request for oral communication, the or each server including such pages having means responsive to data defining customer selection of said icon to capture the telephone number associated with the requesting terminal and data defining the accessed page, said means transferring each of the requesting customer, the address data and a destination telephone number associated with the page owner to a telecommunications network control, the network control causing the establishment of a telephony call through the PSTN to effect a voice communications path between the page owner's telephone and the requesting customer telephone.

Preferably, on offering a call to the page owner's telephone, the network causes transfer of the address of the information point from which the request originated to a terminal associated with the page owner's telephone such that on establishing a voice telephony link the page owner's representative is aware of the information to which the requesting customer refers.

In a preferred mode of operation where the selected link identifies a call centre the network control may determine from data provided by an application running at the call centre the respective loading of the centre whereby where multiple calls centres are available the least heavily loaded may be selected. In such a case the call centre application may receive the address data (URL) from the network control and may use that information to retrieve a page of information defined thereby so that the information may be displayed on a call centre terminal at the time at which the requesting customer's call is connected to a call centre operator.

A telecommunications network in accordance with the invention will now be described by way of example only with reference to the accompanying drawings of which:
Figure 1 is a block schematic diagram of the network;
Figure 2 is a block schematic diagram showing parts of the network in greater detail; and
Figure 3 is a signal flow diagram for the network of Figure 1.

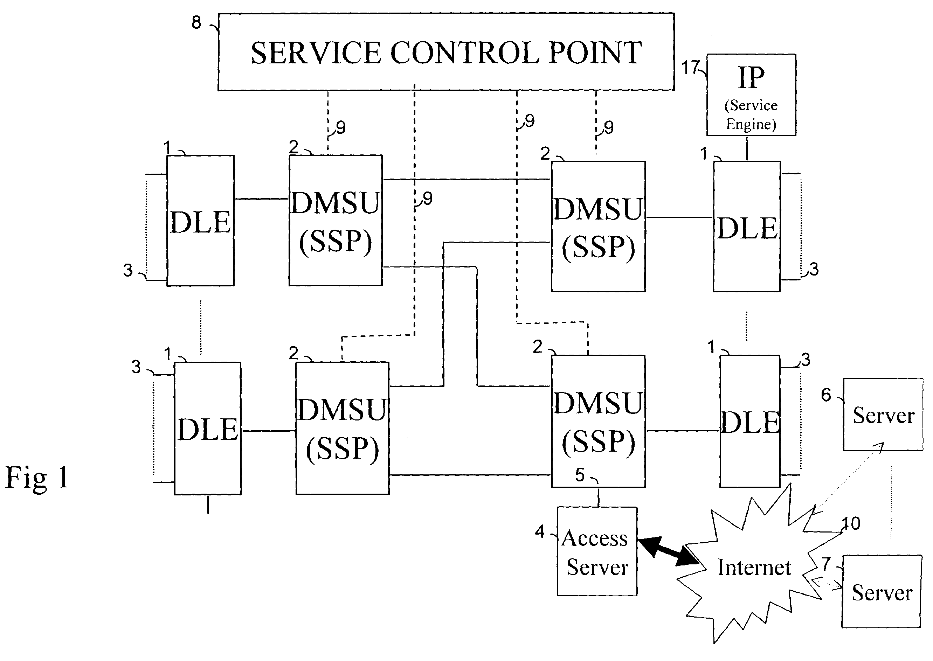

Referring to figure 1, the PSTN is represented as an intelligent network and has a service control point (SCP) 8 to which service switching points (SSPs) 2, (sometimes called digital main switching units) can apply for instructions for connecting a call. The main SSPs 2 are usually fully interconnected and each will support a number of digital local exchanges (DLEs) 1 which have customer connections 3 to provide service to individual telephone lines. Also shown is a so-called intelligent peripheral 17 sometimes called a service engine to which customers may be connected for specific functions such as collecting digits or making an announcements.
When a customer of one of the lines 3 requests a connection through the network by providing a telephone number to the DLE, the DLE may pass the information to one of the SSPs 2 or may in itself be a SSP. The SSP 2 will apply to the SCP 8 for instructions by way of a signalling network indicated by dashed lines 9. An exemplary access server 4 is shown as connected to one of the DMSUs 2 providing a POP in the network at 5. The access server also has one or more POPs on the internet which provides a so-called connectionless communication facility to other servers here represented as servers 6 and 7, which themselves have POPs on the internet represented by an address on the internet. Each of the servers provides pages of information and other functions such as search engines, electronic mail, etc.

It should also be noted that while only a single access server is shown there may be several access servers connected between the connection-oriented network of the PSTN and the connectionless network of the internet 10. The servers, such as those shown at 6 and 7, will have signalling access to the SCP 8 by arrangement with the PSTN operator.

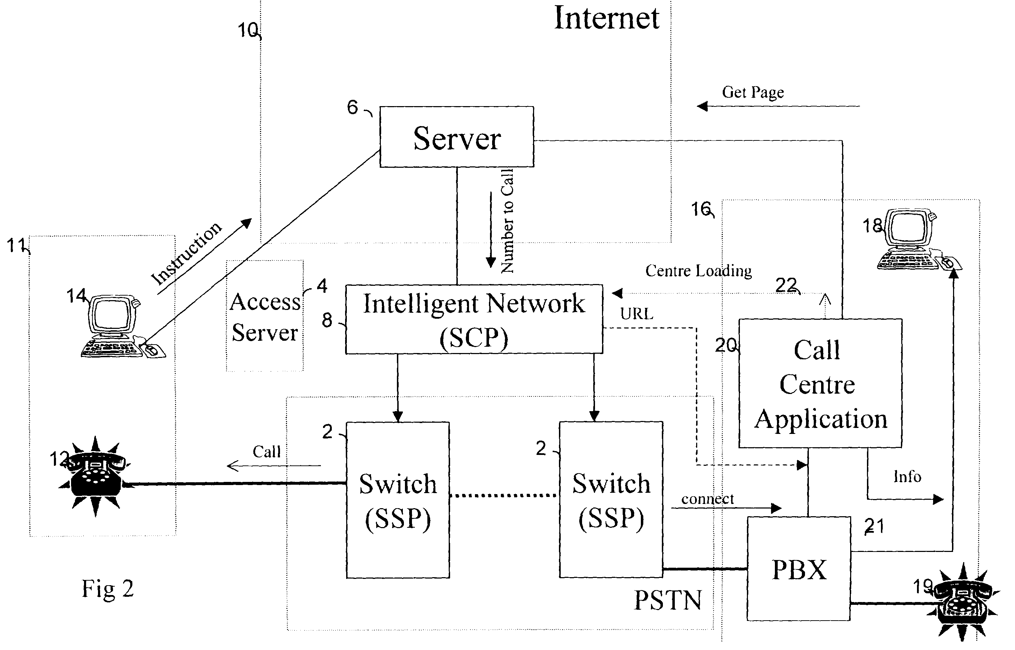

Turning now to Figure 2, the service now to be described may be based upon the server 6 of the internet 10, only a single server being shown schematically for the purposes of description. At a typical customer premises 11 there may be a telephone instrument 12 and a PC 14 each of which may use a line to the PSTN 15 representatively shown as comprising SSPs 2. Although the PC 14 is shown as having a direct connection to the server 6 it will be realised that in practice this is a connection by way of the SSP 2 and the access server 4 previously described with reference to Figure 1. Access to the server 6 will be by the PC user providing a URL or address which links to the server 6 by way of the access server and the connectionless internet 10. A representative call centre 16 having operator terminals 18 and associated telephones (which may in practice be a headset) 19 controlled for connection by a call centre application 20, which links calls through to operators by way of a private branch exchange 21. Many call centre application software programs are known and are not discussed in detail herein. However, it will be noted that the particular application shown here controls the PBX 21 and also provides, by way of a signal link 22, information to the SCP 8 of the intelligent network. A part of the information provided by the call centre application in practice shows the current loading of the call centre, that is for example the length of queue (if any) and the expected time to handle such persons or calls joining the queue at the current time.

Thus where there is a choice of call centres based upon the service telephone number provided, the SCP may select the least heavily loaded call centre.

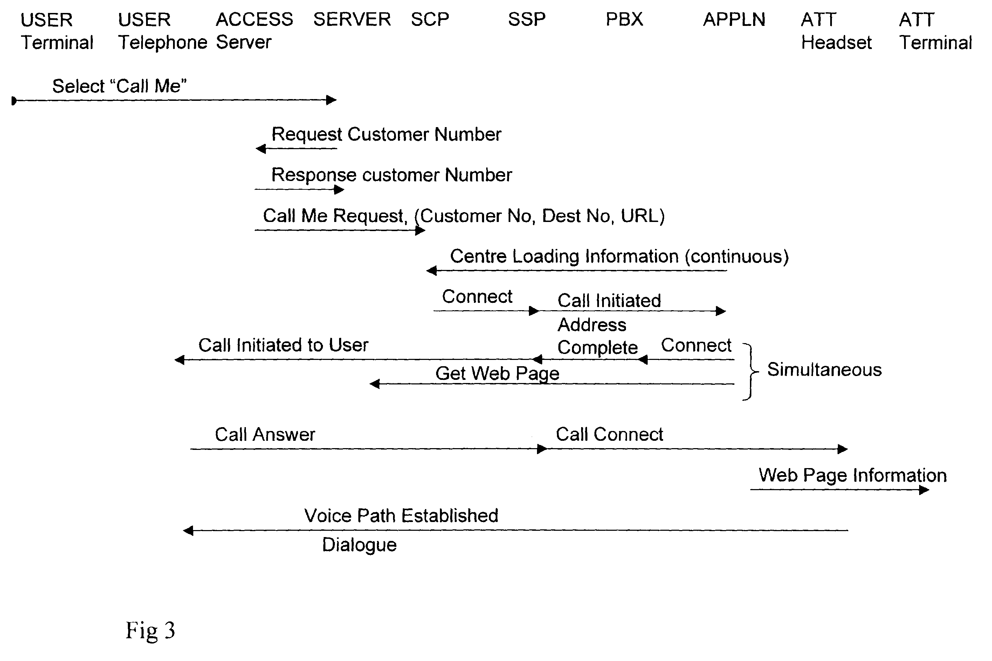

The invention provides for the web page or html page stored on the server 6 to include a hyperlink button labelled, for example, "call me". The appearance of web pages is now well known and the operation of hyperlinks in the internet is similarly readily understood by those in the art. In the present case selection of the call me button by the use of, for example, a computer mouse at the PC 14 and clicking a mouse switch button results in coded information being returned to the server 6 identifying the request.
Referring also to Figure 3, on the occurrence of a call me request from the user terminal 14 to the server 6, the server 6 requests customer number information from the appropriate access server 4 and on receipt of the customer number implements a program which forwards a call me request to the intelligent network SCP 8. The C7 signalling message from the server to the SCP 8 will include typically the customer number, the destination number (identifying the required call centre or centres) and the URL or address of the page from which the call me request originated. Other information may be transferred as appropriate to the requirements of the PSTN and/or the page owner or service provider.

The SCP 8 considering the centre loading information from the call centre application 20 now instructs the SSP 2 to forward a connect instruction and to initiate a call through the PBX 21. The SCP will direct the request to the call centre application 20 which will cause a connect instruction to the PBX which in turn forwards an address complete to the SSP 2 thus initiating a call to the user telephone 12.

At the same time as effecting the connection through the PBX the call centre application will use the received URL to recover from the server 6 the same page that the call me request originated from. Once the network SSP 2 receives a call answer from the PBX 21 a call connect signal is forwarded and the call established through the PBX to the operator's headset or telephone 19 and at the same time the call centre application transfers the recovered page for display on the operator's terminal 18. Once the voice path has been established between the operator's telephone 19 and the customer telephone 12 dialogue may occur.

It will be appreciated that in addition to automatic recovery of a telephone number on selection of the call me icon the system could return a screen requiring the customer to enter a telephone number to be called, the system operating in all other respects in the same manner by returning call centre number, customer telephone number and URL by way of the SCP 8 to effect the connection of calls through.
While as hereinbefore described the page address data (URL) is sent in parallel with the connect instruction to the PBX, it may be transferred directly to the PBX 21 within the signalling from the SSP 2, the PBX passing the URL to the call centre application 20. Since in this case the URL is associated with a specific call, it is simple to associate the displayed (recovered) page on the terminal 18 concurrently with the connection of the voice call to the operator headset 19. However, special INAP (Intelligent Network Application Protocol) messaging between the network and the PBX may be required.

In an alternative implementation, the SCP 8 may transfer URL data directly by way of the signalling link 22 to the Call Centre application 20. In this case, the URL will be associated with the telephone call by means of a call identifier appended to the message carrying the URL and the connect message so that once the call centre application recovers the data page it will await connection of a call carrying the same call identifier to determine which operator terminal 18 to display the recovered page.

## Claims

1. A telecommunications network including an access server having a point of presence on the telecommunications network, the access server further having an address on a data interchange network, said data interchange network having a plurality of servers addressable by way of the data network and including pages of information accessible by users of terminal equipment, at least some of said pages when displayed including a service link defining a request for oral communication, the or each server including such pages having means responsive to data defining customer selection of said icon to capture the telephone number associated with the requesting terminal and data defining the access page, said means transferring each of the requesting customer, the address data and a destination telephone number associated with the page owner to a telecommunications network control, the network control causing the establishment of a telephony call through the PSTN to effect a communications path between the page owner's telephone and the requesting customer telephone.

2. A telecommunications network as claimed in claim 1 wherein the telecommunications network control is responsive to signalling received from a call centre control application to direct calls in respect of a particular destination telephone number to one of a plurality of destinations.

3. A telecommunications networks as claimed in claim 1 wherein the network control transfers the address data to the destination while the communications path is being established.

4. A telecommunications network as claimed in claim 2 in which the call centre application receives address data from the network control, the application causing recovery of page information data from the accessed page and displaying said data on an operator's screen while the communications path is established.
